Europäisches Patentamt

European Patent Office

Office européen des brevets

(11) Publication number: **0 339 902**
**A2**

## (12) EUROPEAN PATENT APPLICATION

(21) Application number: **89304044.4**

(51) Int. Cl.⁴: **B62B 9/10**

(22) Date of filing: **24.04.89**

(30) Priority: **28.04.88 JP 106656/88**
**06.07.88 JP 169878/88**

(43) Date of publication of application:
**02.11.89 Bulletin 89/44**

(84) Designated Contracting States:
**DE ES FR GB IT**

(71) Applicant: **APRICA KASSAI KABUSHIKIKAISHA**
**13-13 Shimanouchi 1-chome Chuo-ku Osaka(JP)**

(72) Inventor: **Kassai, Kenzou**
**13-13, Shimanouchi 1-chome**
**Chuo-ku Osaka(JP)**

(74) Representative: **Abbie, Andrew Kenneth et al**
**R.G.C. Jenkins & Co. 26 Caxton Street**
**London SW1H 0RJ(GB)**

(54) **Baby carriage.**

(57) A baby carriage (1) comprises a hood (6), a case (7) detachably fitted to the rear surface of the hood and a cover (15) kept in the case in a compactly folded state. A part of the cover is detachably connected to the case (7) through snap buttons (16, 17). This cover (15) will not be lost since the same is regularly fitted to the baby carriage. Further, the cover (15) can be spread to cover a seat portion of the baby carriage while the same is partially connected to the container case (7), so that the same can be immediately mounted on a prescribed position when it showers or a strong wind gusts.

FIG.5

EP 0 339 902 A2

**Baby Carriage**

BACKGROUND OF THE INVENTION

Field of the Invention

The present invention relates to a baby carriage, and more particularly, it relates to a baby carriage which has a cover for covering a seat portion from above.

Description of the Background Art

A cover such as a rain cover for covering a seat portion is generally prepared for a baby carriage as an accessory or option. Such a rain cover is completely separated from the body of the baby carriage. Therefore, the user may keep the rain cover independently of the baby carriage. On a rainy or windy day, the user takes out the rain cover and fits the same to the baby carriage.

If the baby carriage has a pocket, the user can keep the rain cover in the pocket in a folded state. Also in this case, the user takes out the rain cover from the pocket and fits the same to the baby carriage when it rains or a wind blows hard.

In general, such a rain cover is completely separated from the body of the baby carriage. Therefore, the rain cover may be lost.

Further, if the rain cover is kept independently of the baby carriage, it is impossible to immediately fit the same to the baby carriage when it showers or a strong wind.gusts.

Even if the rain cover is kept in a pocket provided in the baby carriage, the following problems are caused: In general, a pocket provided in the baby carriage is adapted to keep various things such as a towel, a purse, purchases and the like. If the rain cover is kept in the pocket with such various things, the same may be inadvertently taken out from the pocket with the purse, for example. Further, the user must rummage among such various things, in order to take out only the rain cover. In an extreme case, the purse or the like may be taken out from the pocket with the rain cover.

SUMMARY OF THE INVENTION

An object of the present invention is to provide a baby carriage which can prevent loss of a cover for covering a seat portion from above and which can immediately make use of the cover when it rains, for example.

Another object of the present invention is to provide a baby carriage comprising a cover which can exhibit a winterizing effect, a wind shielding effect, a dust guard effect, an insect screening effect and a quieting effect in addition to a rainproof effect.

A baby carriage according to the present invention comprises a cover formed of a flexible sheet material for covering a seat portion of the baby carriage from above, container means provided on the body of the baby carriage for keeping the cover in a compactly folded state when the cover is not in use and a connecting means for connecting a part of the cover to the container means. Configurations of and positional relation between the cover, the container means and the connecting means are so selected that the cover can be spread to cover the seat portion of the baby carriage in the state connected to the container means.

The cover is partially connected to the container means by the connecting means. That is, the cover is regularly fitted to the baby carriage. Thus, the cover is prevented from being lost.

Further, the cover can be spread to cover the seat portion of the baby carriage in the state partially connected to the container means, whereby the same can be immediately used when it showers or a strong wind gusts.

According to a preferred embodiment of the present invention, an elastic strip exhibiting resiliency against extension is mounted on a peripheral edge portion of the cover for bringing the peripheral edge portion into close contact with the seat portion through its elasticity in tension. The peripheral edge portion of the cover is in close contact with the seat portion, to define no clearance therebetween. Thus, the seat portion can be effectively protected against cold air, wind, dust, insects, noise and the like.

These and other objects, features, aspects and advantages of the present invention will become more apparent from the following detailed description of the present invention when taken in conjunction with the accompanying drawings.

BRIEF DESCRIPTION OF THE DRAWINGS

Figs. 1 to 6 illustrate a first embodiment of the present invention.
In more concrete terms, Fig. 1 is a perspective view showing the first embodiment of the present invention;
Fig. 2 illustrates a hood 6 moved from the state shown in Fig. 1;

Fig. 3 is a front elevational view showing a case for keeping a cover therein;

Fig. 4 is a rear elevational view showing the case;

Fig. 5 is an illustrative sectional view taken along the line V - V in Fig. 3; and

Fig. 6 is a perspective view showing a mounting state of a cover 15.

Figs. 7 to 9 illustrate a second embodiment of the present invention.

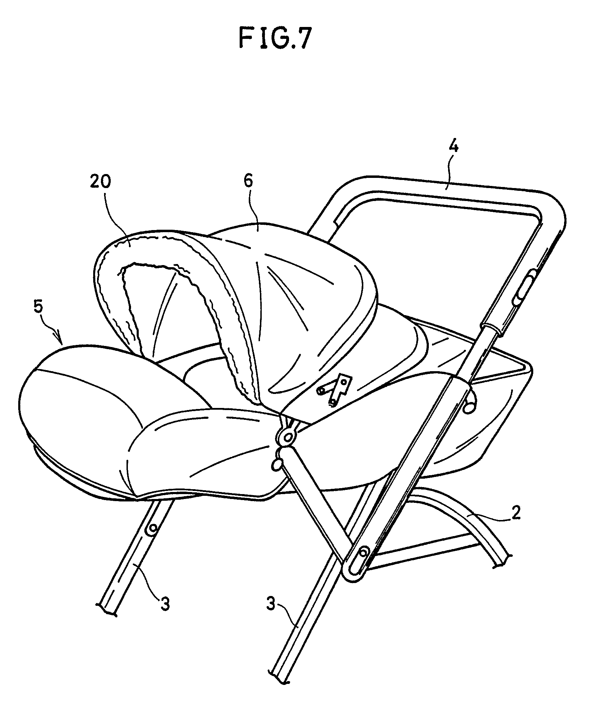

In more concrete terms, Fig. 7 is a perspective view showing the second embodiment of the present invention;

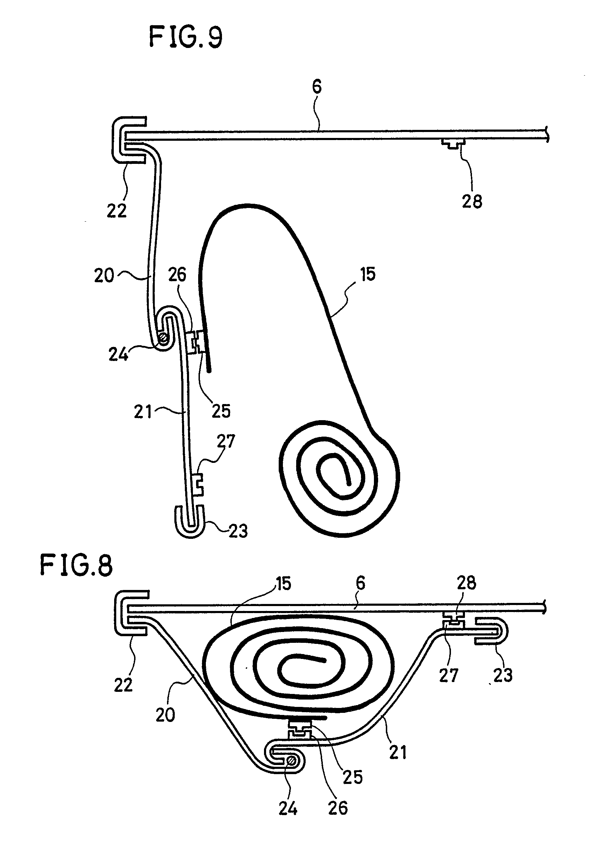

Fig. 8 is an illustrative sectional view showing an essential part of the second embodiment; and

Fig. 9 is an illustrative sectional view showing a second container member 21 detached from a hood 6 shown in Fig. 8.

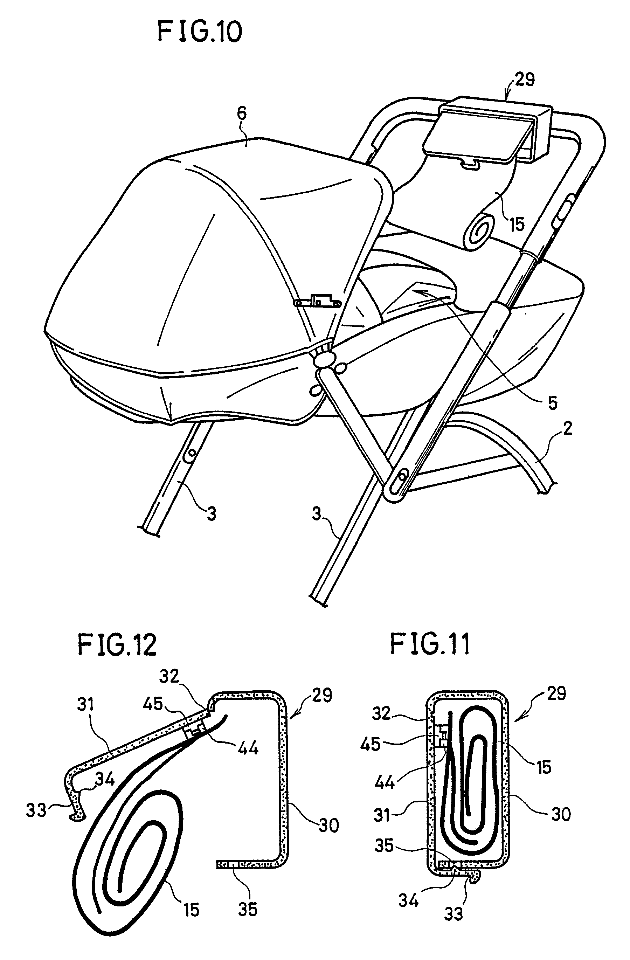

Figs. 10 to 13 illustrate a third embodiment of the present invention.

In more concrete terms, Fig. 10 is a perspective view showing the third embodiment of the present invention;

Fig. 11 is an illustrative sectional view showing an essential part of the third embodiment;

Fig. 12 is an illustrative sectional view showing a lid portion 31 opened from the state shown in Fig. 11; and

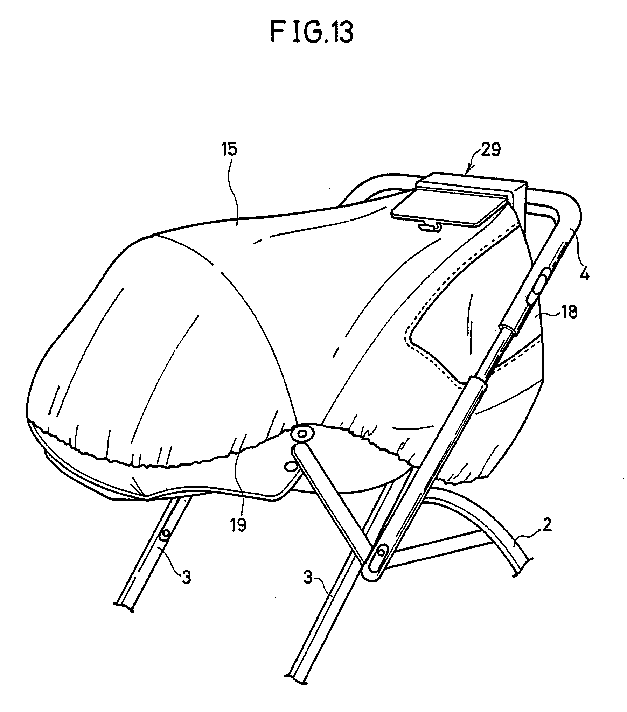

Fig. 13 is a perspective view showing a mounting state of a cover 15.

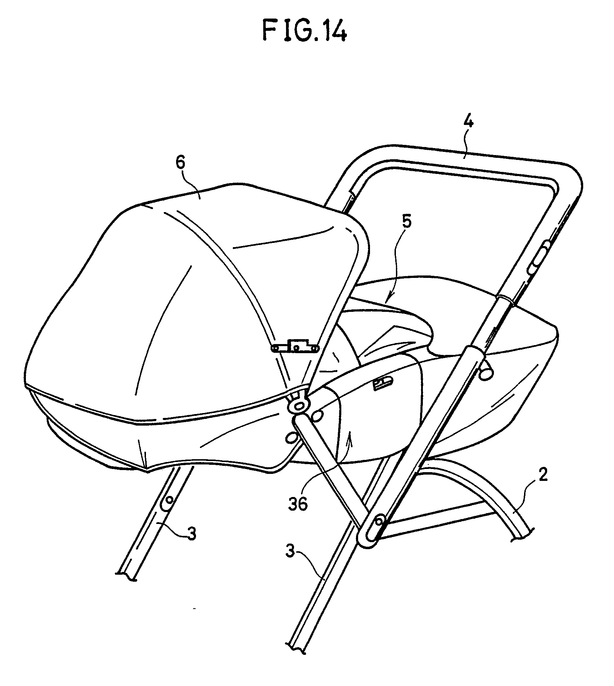

Figs. 14 to 18 illustrate a fourth embodiment of the present invention.

In more concrete terms, Fig. 14 is a perspective view showing the fourth embodiment of the present invention;

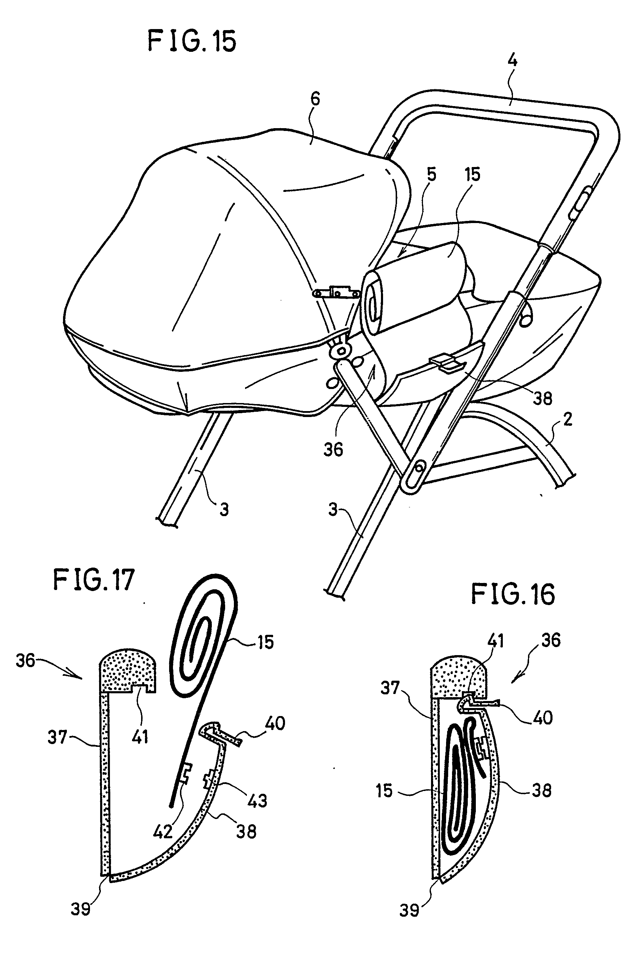

Fig. 15 is a perspective view showing a cover 15 being taken out from the state shown in Fig. 14;

Fig. 16 is an illustrative sectional view showing an essential part of the fourth embodiment;

Fig. 17 is an illustrative sectional view showing a lid portion 38 opened from the state shown in Fig. 16; and

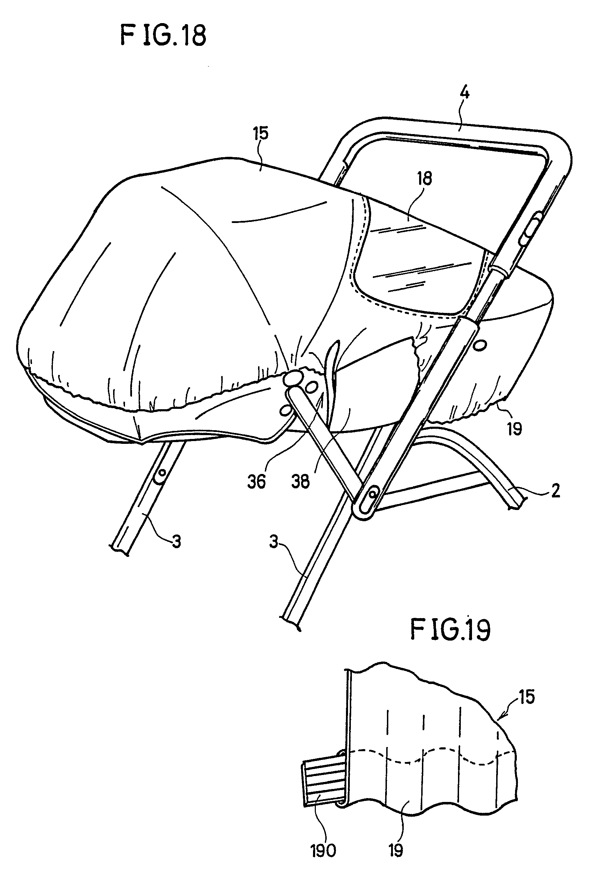

Fig. 18 is a perspective view showing a mounting state of the cover 15.

Fig. 19 is a perspective view illustrating structure of an edge portion 19 of the cover.

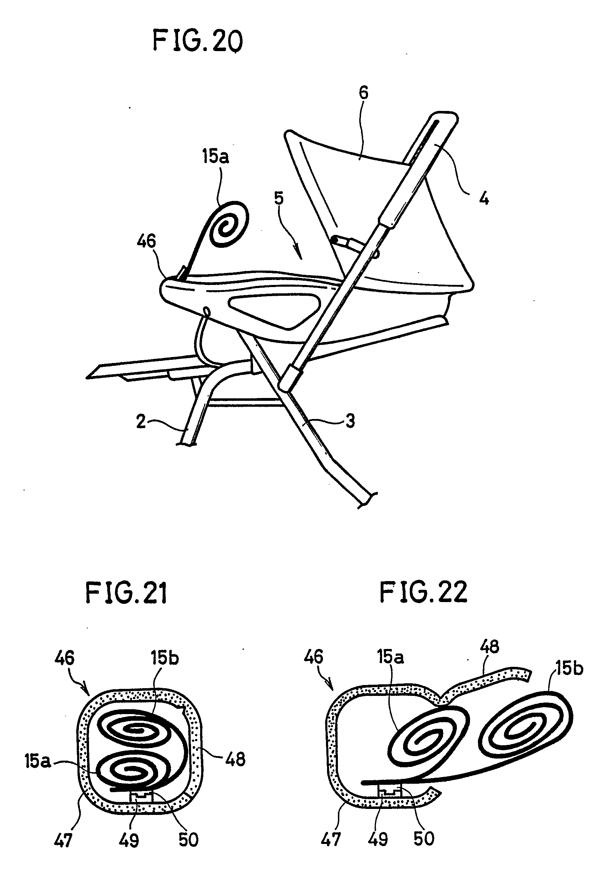

Figs. 20 to 25 illustrate a fifth embodiment of the present invention.

In more concrete terms, Fig. 20 is a side elevational view showing the fifth embodiment of the present invention;

Fig. 21 is an illustrative sectional view showing an essential part of the fifth embodiment;

Fig. 22 is an illustrative sectional view showing a lid portion 48 opened from the state shown in Fig. 21;

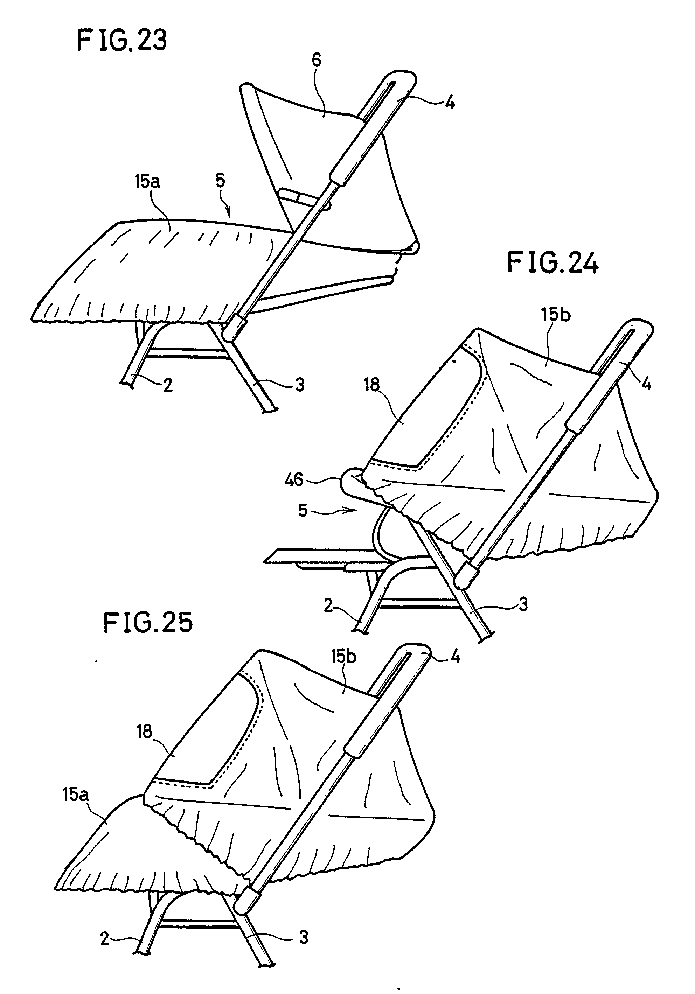

Fig. 23 is a side elevational view showing a mounting state of a first cover 15a;

Fig. 24 is a side elevational view showing a mounting state of a second cover 15b; and

Fig. 25 is a side elevational view showing mounting states of the first and second covers 15a and 15b.

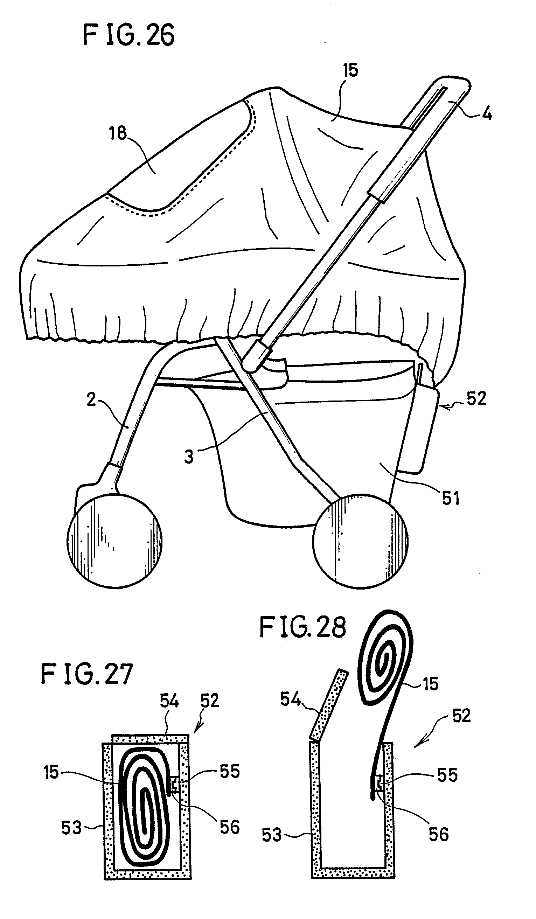

Figs. 26 to 28 illustrate a sixth embodiment of the present invention.

In more concrete terms, Fig. 26 is a side elevational view showing the sixth embodiment of the present invention;

Fig. 27 is an illustrative sectional view showing an essential part of the sixth embodiment; and

Fig. 28 is an illustrative sectional view showing a lid portion 54 opened from the state shown in Fig. 27.

DESCRIPTION OF THE PREFERRED EMBODIMENTS

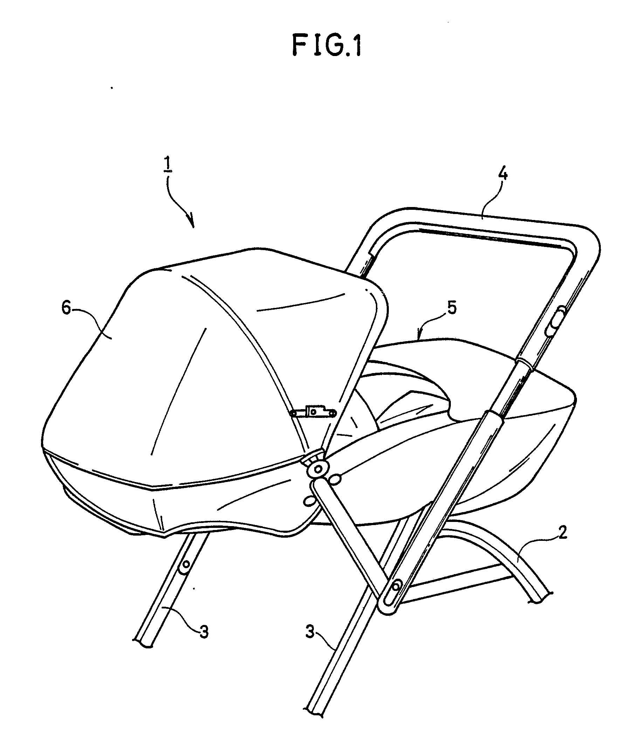

Fig. 1 is a perspective view showing a first embodiment of the present invention. A baby carriage 1 comprises front legs 2 having front wheels in lower ends thereof, a rear leg 3 having a rear wheel in its lower end, a push rod 4 for moving the baby carriage 1, a seat portion 5 for receiving a baby and a hood 6 arranged to cover a part of the seat portion 5. The hood 6 is rotatable as a whole, and an angle of development thereof is adjustable.

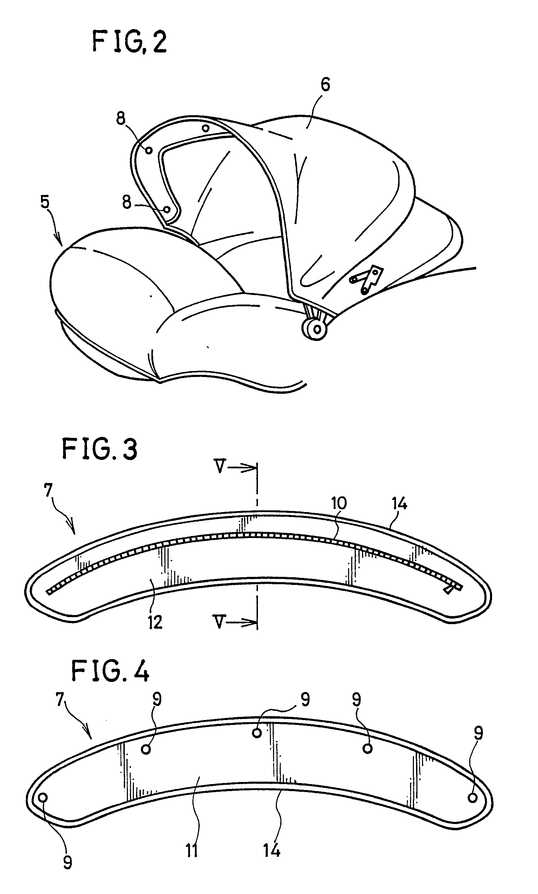

Fig. 2 is a perspective view showing a state in which the hood 6 is moved toward the push rod 4. The rear surface of the hood 6 appears in Fig. 2. According to this embodiment, a case 7 for a cover for covering the seat portion 5 of the baby carriage 1 from above is fitted to the rear surface of the hood 6. In the state shown in Fig. 2, this case 7 is detached from the hood 6.

Fig. 3 is a front elevational view showing the case 7, and Fig. 4 is a rear elevational view thereof. The case 7 has snap buttons 9 on its back surface, while the hood 6 has snap buttons 8, which are engageable with the snap buttons 9, in its rear surface. Thus, the case 7 is fitted to the rear surface of the hood 6 by engaging the snap buttons 8 and 9 with each other. As shown in Fig. 3, a zipper 10 is provided on the front surface of the case 7. In the state shown in Fig. 3, the zipper 10 is closed.

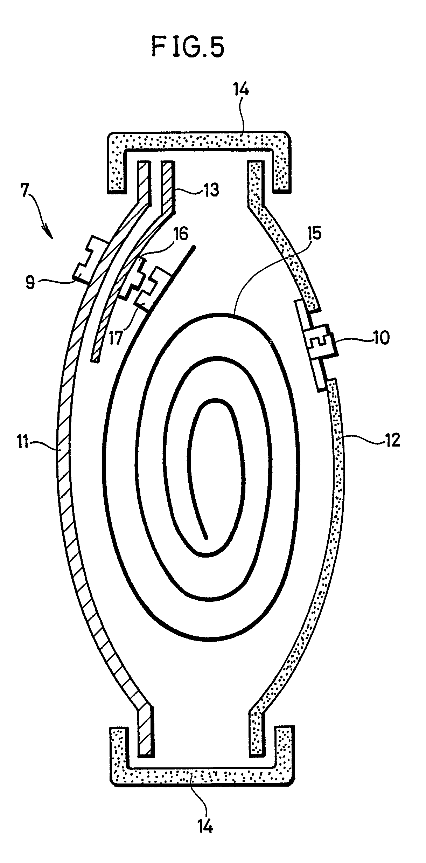

Fig. 5 is an illustrative sectional view taken along the line V - V in Fig. 3. Referring to Fig. 5, the case 7 comprises a resin liner 11, a cloth member 12, a resin core 13 and a tape member 14. Ends of the liner 11, the core 13 and the cloth member 12 are fixed to the tape member 14 by a method such as seaming, for example. The other ends of the liner 11 and the cloth member 12 are also fixed to the tape member 14 by a method such as seaming, for example. The snap buttons 9, which are engageable with the snap buttons 8 of the hood 6, are provided in the liner 11, while the zipper 10 is provided in the cloth member 12.

A space is defined between the liner 11 and the cloth member 12. This space is adapted to keep the cover 15 for covering the seat portion 5 of the baby carriage 1 from above in a compactly folded state. The cover 15 is formed of a soft flexible sheet material so that its configuration can be arbitrarily changed and the same can be folded up compactly. Preferably the material for the cover 15 has both of water tightness and moisture permeability. Such a material prevents the seat portion 5 from passage of rainwater and water, while outwardly releasing sweat and hot air.

As shown in Fig. 5, the cover 15 has a snap button 17, and the core 13 has another snap button 16 which is engageable with the snap button 17. Thus, the cover 15 is connected to the core 13 by engagement of the snap buttons 16 and 17. On the other hand, the cover 15 can be detached from the case 7 by disengagement of the snap buttons 16 and 17. Thus, when the cover 15 is soiled, for example, the same can be independently washed.

The cover 15 is compactly folded up and kept in the case 7 when the same is not in use. In this case, the zipper 10 is closed. Further, the case 7 is fitted to the rear surface of the hood 6. This state is shown in Fig. 1.

When it rains, for example, the zipper 10 is opened first. Then the cover 15 is drawn out from the opening of the zipper 10 in the state connected to the core 13. Since the cover 15 is partially connected to the case 7, the extracted portion of the cover 15 juts out from the lower edge of the hood 6.

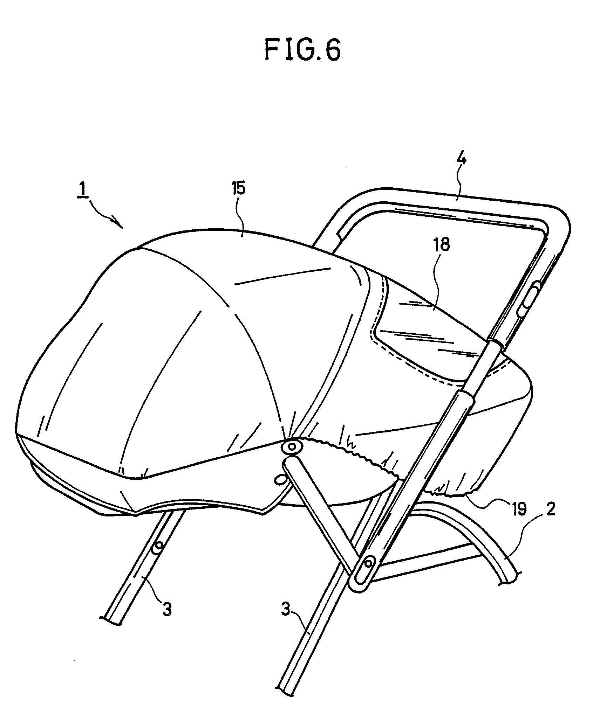

Thereafter the cover 15 is spread entirely over entire hood 6 and the seat portion 5 as shown in Fig. 6. Preferably an edge portion 19 of the cover 15 exhibits resiliency against extension. This structure is described in more concrete terms with reference to Fig. 19. The edge portion 19 of the cover 15 is sewn in an inwardly turned-up state, and an elastic cord 190 is passed through the turned-up portion. The edge portion 19 has a number of gathers when no force is applied thereto. The structure shown in Fig. 19 is applied to the overall edge portion 19 jutting out from the lower edge portion of the hood 6. The gathers of the edge portion 19 can be stretched when tensile force is applied thereto, while the elastic cord 190 provides shrinkage force against such tensile force. Thus, the edge portion 19 of the cover 15 exhibits resiliency against extension.

When the cover 15 entirely covers the seat portion 5 as shown in Fig. 6, the edge portion 19 is located in the bottom of the seat portion 5. In this case, the mounting state of the cover 15 is tightly maintained since the edge portion 19 exhibits elasticity in tension. Further, the edge portion 19 of the cover 15 is in close contact with the seat portion 5, whereby no clearance is defined between the seat portion 5 and the cover 15. Thus, the seat portion 5 can be effectively protected against cold air, wind, dust, insects, noise and the like.

As shown in Fig. 6, the cover 15 is preferably provided with a transparent window 18 of a transparent plastic material. This transparent window 18 may be prepared by a non-yellowing film of urethane, for example. This material will not get mussed even if the same is folded up compactly.

Fig. 7 is a perspective view showing a second embodiment of the present invention. In this embodiment, elements identical or corresponding to those of the first embodiment are indicated by the same reference numerals. Also in this embodiment, a cover 15 for covering a seat portion 5 of the baby carriage from above is kept in a rear surface of a hood 6. In the sate shown in Fig. 7, the hood 6 is moved toward a push rod 4, to expose a first container member 20 located in a bottom surface of the hood 6.

Figs. 8 and 9 are illustrative sectional views showing structure relating to a portion coupling the hood 6 with the first container member 20. Referring to Figs. 7 to 9, container means for receiving the cover 15 in a compactly folded state comprises the first container member 20 and a second container member 21. A tape member 22 is arranged to hold a first end of the first container member 20 and an edge of the hood 6, which are fixed to each other by a method such as seaming, for example. Another tape member 23 is fitted to a first end of the second container member 21. Second ends of the first and second container members 20 and 21 are connected with each other by a method such as seaming, for example. An elastic cord 24 is inserted/arranged in such a connecting portion. Thus, this connecting portion is considerably gathered in a normal state, to exhibit resiliency against extension.

The first and second container members 20 and 21 are formed by thick cloth members, for example. The second container member 21 is provided with a snap button 27, while the hood 6 is provided on its rear surface with another snap button 28 which is engageable with the snap button 27. Further, the cover 15 has a snap button 25 while the second container member 21 has another snap button 26 which is engageable with the snap button 25.

When the cover 15 is not in use, the second container member 21 is connected to the rear surface of the hood 6 through the snap buttons 27 and 28. This state is shown in Fig. 8. The cover 15 is kept in a space defined between the hood 6 and the first and second container members 20 and 21 in a compactly folded state. At this time, the snap button 25 of the cover 15 is engaged with the snap button 26 of the second container member 21.

When it is necessary to use the cover 15, the second container member 21 is detached from the rear surface of the hood 6 as shown in Fig. 9. Then the cover 15 is spread while maintaining engagement between the snap buttons 25 and 26. Thereafter the cover 15 is desirably mounted through manipulation similar to that in the first embodiment.

Figs. 10 to 13 illustrate a third embodiment of the present invention. In this embodiment, a housing 29 for keeping a cover 15 in a compactly folded state is fitted to a substantially central portion of a push rod 4. Particularly with reference to Figs. 11 and 12, the housing 29 comprises a body portion 30 which is fixe/fitted to the push rod 4 and a lid portion 31 which is rotatably connected to the body portion 30. Thickness of a connecting portion 32 between the body portion 30 and the lid portion 31 is reduced so that the lid portion 31 can be rotated about the connecting portion 32. The lid portion 31 has a grip portion 33 which overlaps with the bottom wall of the body portion 30. This grip portion 33 is provided with a projection 34, while the body portion 30 is provided in its bottom wall with a hole 35 which is engageable with the projection 34.

The cover 15 kept in the housing 29 in a compactly folded state has a snap button 44, while the lid portion 31 of the housing 29 has another snap button 45 which is engageable with the snap button 44. When the cover 15 is not in use, the lid portion 31 is closed as shown in Fig. 11. When the cover 15 is used, on the other hand, the grip portion 33 of the lid portion 31 is bent to disengage the projection 34 from the hole 35, thereby to open the lid portion 31 as shown in Fig. 12. Further, the cover 15 is drawn out from the housing 29 and widely spread while maintaining engagement between the snap buttons 44 and 45. Then, the cover is spread entirely over the hood 6 and the seat portion 5 as shown in Fig. 13. In this embodiment, the structure shown in Fig. 19 is applied to the overall peripheral edge portion 19 of the cover 15.

Figs. 14 to 18 illustrate a fourth embodiment of the present invention. In this embodiment, container means for keeping a cover 15 therein is implemented by a handrail portion 36 of the baby carriage. Particularly with reference to Figs. 16 and 17, the handrail portion 36 comprises a body portion 37 and a lid portion 38 which is rotatably connected to the body portion 37. Thickness of a connecting portion 39 between the body portion 37 and the lid portion 38 is reduced. As shown in the figures, the lid portion 38 has a grip portion 40, while the body portion 37 has a cavity 41 which is engageable with the grip portion 40. The cover 15 kept in the handrail portion 36 has a snap button 42, while the lid portion 38 has another snap button 43 which is engageable with the snap button 42.

When the cover 15 is not in use, the lid portion 38 is closed and the cover 15 is kept in the handrail portion 36 in a compactly folded state, as shown in Fig. 16. When the cover 15 is used, on the other hand, the lid portion 38 is opened as shown in Fig. 17 and the cover 15 is drawn out from the handrail portion 36 while maintaining engagement between the snap buttons 42 and 43. Thereafter the cover 15 is widely spread to cover the hood 6 and the seat portion 5 as shown in Fig. 18.

Figs. 20 to 25 illustrate a fifth embodiment of the present invention. In this embodiment, container means for keeping covers 15a and 15b therein is implemented by a front guard member 46 located in front of a seat portion 5 of the baby carriage. Particularly with reference to Figs. 21 and 22, the front guard member 46 comprises a body portion 47 and a lid portion 48 which is rotatably connected to the body portion 47. The front guard member 46 contains two covers 15a and 15b. A snap button 50 is fitted to these covers 15a and 15b, while the body portion 47 has another snap button 49 which is engageable with the snap button 50.

When the covers 15a and 15b are not in use, the lid portion 48 is closed as shown in Fig. 21, while the covers 15a and 15b are kept in the front guard member 46 in compactly folded states. When the covers 15a and 15b are used, on the other hand, the lid portion 48 is opened as shown in Fig. 22, and the covers 15a and 15b are drawn out from the front guard member 46 while maintaining engagement between the snap buttons 49 and 50. The first cover 15a is adapted to cover a peripheral side of the seat portion 5 of the baby carriage, as shown in Fig. 23. The second cover 15b is adapted to cover an upper side of the seat portion 5 of the baby carriage, as shown in Fig. 24. Further, a transparent window 18 is provided in the second cover 15b, as shown in Fig. 24. Fig. 25 is a side elevational view showing mounting states of the covers 15a and 15b.

Figs. 26 to 28 illustrate a sixth embodiment of the present invention. The bay carriage shown in Fig. 26 has a large bag 51 under its seat portion, for keeping purchases and the like. In this embodiment, container means for keeping a cover 15 therein is implemented by a case 52 fitted to a rear portion of the bag 51.

Figs. 27 and 28 are illustrative sectional views showing the case 52. The case 52 comprises a body portion 53 and a lid portion 54 which is rotatably connected to the body portion 53. The cover 15 contained in the case 52 has a snap button 56, while the body portion 53 has another snap button 55 which is engageable with the snap button 56.

When the cover 15 is not in use, the lid portion 54 is placed as shown in Fig. 27. When the cover 15 is used, on the other hand, the lid portion 54 is opened as shown in Fig. 28 and the cover 15 is drawn out from the case 52 while maintaining engagement between the snap buttons 56 and 55. Thereafter the cover 15 is widely spread to cover the hood and the seat portion as shown in Fig. 26.

According to each embodiment of the present invention as hereinabove described, the cover 15 for covering the seat portion 5 of the baby carriage from above is regularly kept in the container means provided on the body of the baby carriage, whereby the cover 15 is effectively prevented from being lost. Further, the cover 15 can be extended from the container means to cover the seat portion while being partially connected to the container means, whereby the cover 15 can be immediately used when it showers, for example.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A baby carriage comprising:
a cover (15) formed of a flexible sheet material for covering a seat portion of said baby carriage from above;
container means (7) provided on a body of said baby carriage for keeping said cover in a compactly folded state when said cover is not in use; and
connecting means (16, 17) for connecting a part of said cover to said container means,
configurations of and positional relation between said cover, said container means and said connecting means being so selected that said cover can be spread to cover said seat portion of said baby carriage in a state being connected to said container means.

2. A baby carriage in accordance with claim 1, wherein
an elastic strip (190) exhibiting resiliency against extension is mounted on a peripheral edge portion of said cover (15) for bringing said peripheral edge portion into close contact with said seat portion through its elasticity in tension.

3. A baby carriage in accordance with claim 2, wherein
said peripheral edge portion of said cover has a large number of gathers which are stretched upon application of tensile force.

4. A baby carriage in accordance with claim 1, wherein
said cover includes a transparent window formed of a transparent plastic material.

5. A baby carriage in accordance with claim 1, wherein
said connecting means includes a fastener (16, 17) for detachably connecting a part of said cover to said container means.

6. A baby carriage in accordance with claim 1, further including a hood (6) arranged to cover a part of said seat portion from above,
said container means being fitted to a rear surface of said hood.

7. A baby carriage in accordance with claim 6, wherein said container means includes a case (7) detachably fitted to said rear surface of said hood, a part of said cover being connected to said case.

8. A baby carriage in accordance with claim 7, wherein
said connecting means includes a fastener (16, 17) for detachably connecting a part of said cover to said case.

9. A baby carriage in accordance with claim 6, wherein
said container means includes a flexible sheet member (20, 21) having an end fitted to said hood and a fastener (27, 28) for detachably fitting another end of said flexible sheet member to said rear surface of said hood,
a part of said cover being connected to said flexible sheet member.

10. A baby carriage in accordance with claim 9, wherein
said connecting means includes a fastener (25, 26) for detachably connecting a part of said cover to said flexible sheet member.

11. A baby carriage in accordance with claim 9, wherein
said flexible sheet member includes a first container member (20) having an end fitted to said hood, a second container member (21) having an end connected to another end of said first container member and another end detachably connected to said rear surface of said hood and an elastic member (24) for longitudinally shrinking a connecting portion between said first and second container members.

12. A baby carriage in accordance with claim 1, further including a push rod (4) for moving said baby carriage,
said container means being fitted to said push rod.

13. A baby carriage in accordance with claim 12, wherein

said container means includes a housing (29) fitted to a central portion of said push rod,

said connecting means including a fastener (44, 45) for detachably connecting a part of said cover to the inner surface of said housing.

14. A baby carriage in accordance with claim 1, further including a handrail portion (36) located on a side surface of said seat portion,

said container means being provided in said handrail portion.

15. A baby carriage in accordance with claim 1, further including a front guard member (46) located in front of said seat portion,

said container means being provided in said front guard member.

16. A baby carriage in accordance with claim 15, wherein

said cover includes a first cover (15a) which is so formed as to cover a peripheral side of said seat portion and a second cover (15b) which is so formed as to cover an upper side of said seat portion.

17. A baby carriage in accordance with claim 1, further including a bag (51) arranged under said seat portion,

said container means being fitted to said bag.

18. A baby carriage having cover means connected to container means therefor, which container means are attached to said baby carriage, the cover means being storable in a folded condition in said container means and being adapted to cover at least some of the accommodation region of the carriage whilst still connected to the container means when in an unfolded condition.

# FIG.1

FIG. 2

FIG. 3

FIG. 4

# FIG.5

# FIG.6

# FIG.7

# FIG.9

# FIG.8

# FIG.10

# FIG.12

# FIG.11

# FIG.13

## FIG.14

FIG.15

FIG.17

FIG.16

FIG.18

FIG.19

# FIG.20

# FIG.21

# FIG.22

FIG.23

FIG.24

FIG.25

FIG. 26

FIG. 28

FIG. 27